# EUROPEAN PATENT APPLICATION

(11) **EP 4 671 880 A1**
(43) Date of publication of application: **31.12.2025**
(21) Application number: 24184531.2
(22) Date of filing: 26.06.2024
(51) Int. Cl.: G05B 13/02

(54) **TECHNIQUES TO OPTIMIZE A PERFORMANCE OF A SPECIFIC SYSTEM**

(71) Applicant: Deutsche Telekom AG, 53113 Bonn (DE)
(72) Inventor: VOLMER, Tim, 52076 Aachen (DE); JÖRRES, Sebastian, 50259 Pulheim (DE); STADLER, Fabian, 53881 Euskirchen (DE); ZÁMECNíK, Stanislav, 639 00 Brno-Stýrice, Brno (CZ); MIKOLAJ, Michal, 01001 Zilina (SK); RÁRA, Michael, 756 61 Ro nov pod Radho tem (CZ)
(74) Representative: Braun-Dullaeus Pannen Emmerling Patent- & Rechtsanwaltspartnerschaft mbB

(57) **Abstract**

A method and system to generate a trained machine-learning-model M that models a specific system comprising the following steps:
• Providing a functional raw-model f(ai, x) of the specific system, wherein the raw-model comprises adjustable parameters ai and input variables x;
• Providing measurement values xₘ of the specific system as the input variables, wherein the measurement values xₘ correspond to conditions and/or correspond to a behavior of the specific system;
• Using the measurement values xₘ of the specific system by a fitting algorithm to fit the adjustable parameters ai of the raw-model f(aᵢ, xₘ ) to the specific system as to obtain the optimized parameters a₁ of a fitted-model f(a₁, xₘ) of the specific system;
• Using the fitted-model f(a₁, xₙ) of the specific system to generate simulated values Sn by using different sets of input variables xₙ that characterize the conditions and/or characterize the behavior of the specific system;

Using the simulated values Sₙ to generate the trained machine-learning-model M as to model the specific system.

## Description

The invention relates to a method, a usage, a computing unit, a system and a computer program to optimize a performance of the specific system, in particular in the case that the specific system is the building and its energy consumption.

AI (artificial intelligence) based on trained machine-learning models is used for many and various problems/applications these days. Such an AI is very powerful if a large set of training-data was used and if a question or a task for the AI relates to a system that is represented by this set of training-data. However, the AI has problems in making predictions or analysis if such a system is not being represented by the set of training-data. This can be the case if the system is a specific system, which is very unique and deviates in its properties from the ones of the data set. Even if this specific system would be part of the training data it is very likely that it would be underrepresented so that it could not influence the adjustment of the nodes of the neural network enough so that the AI models the specific system appropriately. Hence, it is a problem to obtain the necessary training-data of the specific system to train a machine-learning model only with data obtained from the specific system.

On the other hand, many specific systems can be modeled in a functional way by their physical properties. Such a - often deterministic - functional model consumes more computational power and is not that fast and not that flexible in predicting a behavior of the specific system as AI that is only trained on the specific system.

The specific system used in this invention can be described to have at least the following properties i) it is unique, ii) its physical properties can be described in a functional way, iii) and its conditions can be measured by sensors.

The invention can be used with various kinds of specific systems - as will be explained later. However, specific embodiments will mainly be described within the context of the specific system being a building.

The building sector faces unprecedented challenges in energy management, marked by escalating costs, environmental considerations, and the imperative for sustainable practices. Buildings account for 35 percent of total energy consumption in Germany. At the end of 2024 Germany's building sector has missed its climate targets the fourth consecutive time. While traditional approaches to increase energy and emission efficiency have offered partial solutions, the increasing complexity of these challenges demands a more time effective and scalable methodology.

Model Predictive Control (MPC) has become a prominent approach in optimizing Heating, Ventilation, and Air Conditioning (HVAC) systems in buildings due to its ability to handle complex dynamics and constraints while providing energy-efficient operation and maintaining occupant comfort. The state-of-the-art in MPC for HVAC systems involves several key aspects.
1. Modeling: Advanced models are utilized to capture the dynamic behavior of the HVAC system, including thermal dynamics of the building, weather conditions, occupancy patterns, and equipment performance. These models are crucial for predicting future system behavior under various operating conditions.
2. Optimization: MPC formulates an optimization problem that minimizes energy consumption and operating costs while satisfying comfort requirements and system constraints. The optimization problem typically considers factors such as setpoint temperatures, airflow rates, equipment schedules, and energy tariffs.
3. Prediction: MPC relies on predictive models to forecast future disturbances and system behavior. Accurate predictions enable proactive control decisions to anticipate changes in occupancy, weather conditions, or equipment failures, ensuring optimal system performance in real-time.
4. Implementation: Real-time implementation of MPC requires robust algorithms capable of solving large-scale optimization problems efficiently. Additionally, integration with building automation systems (steering units) and sensor networks is essential for data acquisition, control signal execution, and feedback loops.
5. Adaptation: Adaptive MPC strategies continuously update model parameters and control policies based on real-time data, improving system performance and resilience to uncertainties such as occupancy variations, equipment degradation, or changes in building usage patterns.

In building energy management and HVAC optimization, various companies are at the forefront of developing solutions to improve energy efficiency, occupant comfort, and sustainability in commercial and industrial buildings. From established industry leaders to emerging startups, each market companion brings unique expertise and interesting solutions.

### White Box Modeling:

Physics-Based: MeteoViva's optimization approach relies on physics-based models that incorporate fundamental principles of thermodynamics, heat transfer, and fluid dynamics to accurately simulate the behavior of HVAC systems and building dynamics.

Accuracy: MeteoViva's deterministic models are designed to provide accurate predictions of HVAC system performance and energy consumption, especially when the underlying physics are well understood and accurately modeled.

Interpretability: MeteoViva's deterministic modeling approach offers interpretability, as the relationships between variables are explicitly defined based on physical laws. This allows users to understand the underlying mechanisms driving system behavior and the impact of control actions.

The downsides of this approach has been described before, calculate the behavior of the system by using a physical model requires high computational power, is not very fast and is not very flexible regarding new patterns.

### Black Box Modeling

Empirical: aedifion's optimization approach employs data-driven models that learn patterns and relationships from empirical data without explicitly incorporating physical principles. These models are developed using machine learning algorithms and statistical techniques to capture complex relationships within building systems.

Flexibility: aedifion's data-driven models offer flexibility and adaptability, as they can capture complex nonlinear relationships and adapt to changing system dynamics without requiring detailed knowledge of underlying physics. This allows for scalable solutions that can handle diverse datasets and different building environments.

Scalability: aedifion's data-driven modeling approach is scalable to large and heterogeneous building environments, as it can handle diverse datasets and automatically adjust to different operating conditions and system configurations. This flexibility enables aedifion's platform to be deployed across multiple buildings with varying characteristics.

The downsides of this approach has been described before, as the building is a unique specific system, a "general" trained machine-learning model is often not able to describe the behavior of the specific system with sufficient accuracy. It is a further downside that a lot of historic data is needed.

### Challenges of Energy Management in the Commercial Building Sector

The energy management landscape in the building sector is confronted with unique challenges, reflecting the commitment to sustainability, stringent environmental standards, and the ongoing transition to renewable energy. These challenges underscore the necessity for advanced and adaptive optimization solutions.

The beginning of Germany's energy transition has led to an increased integration of renewable energy sources. However, the intermittent nature of renewables poses challenges in balancing energy supply and demand. Traditional energy management models struggle to adapt to the variability introduced by renewable sources, necessitating a more dynamic and data-driven approach.

The national building sector operates within a framework of strict regulations and efficiency targets. Meeting and exceeding these standards requires a nuanced understanding of building dynamics, energy consumption patterns, and compliance requirements. State of the art approaches often fall short in achieving the level of granularity and adaptability demanded by the evolving regulatory landscape.

Deutsche Telekom's Real Estate portfolio is characterized by a diverse range of unique building typologies as specific systems, including historic structures, modern commercial buildings, and production relevant buildings. Each presents its own set of challenges, from retrofitting complex buildings for energy efficiency to optimizing the energy consumption of large-scale commercial facilities. The heterogeneity of building types demands a flexible and scalable optimization solution.

The increasing adoption of smart building technologies adds complexity to energy management. While these technologies offer opportunities for enhanced control and automation, their effective integration into a cohesive energy optimization framework poses challenges. A sophisticated optimization system must seamlessly incorporate and leverage the capabilities of these smart technologies.

In the view of above, it is an object of the present invention to at least partially overcome the shortcomings of the state-of-the-art. In particular, it is an object of the invention to create a trained machine learning model - also called a trained AI - that can model specific systems. In particular, it is a further object to use the trained machine-learning model to optimize the operation of the specific system, for example by reducing the energy consumption of the specific system.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method is disclosed to generate a trained machine-learning-model M that models a specific system, in particular a system with unique physical properties. In particular, the machine-learning-model M can predict the behavior of the specific system. In an embodiment, the steps of the method can be performed in the order described below. The method comprising the following steps:
- Providing a functional raw-model f(aᵢ, x) of the specific system, wherein the raw-model comprises adjustable parameters aᵢ and input variables x;
   ∘ the functional raw-model f describes the physical properties of the system, wherein not all parameters aᵢ are adjusted in order to describe the specific system. For example, in the case that the specific system is a building the raw-model f(aᵢ, x) and can comprise the information that a certain wall is made of concrete but the thickness of the wall is not known at that point so that it is an adjustable parameters aᵢ. Another possible approach is not to fit the "real" wall thickness at all, but simply to create a model that behaves thermally similar to the real system. The input variable(s) x can comprise states of the building that can be measured like temperatures within the room or on the walls, radiation, and/or external weather conditions. At least some of the input variables x can be measured by sensors placed at corresponding locations within and/or around the specific system, in particular the building; aᵢ or x can be a single parameter/variable, a vector of parameters/variables or a set of parameters/variables; the functional raw-model f(aᵢ, x) can be an existing simulation model for buildings is employed, which accurately represents all physical relationships but has not been parameterized for the specific system, in particular to the building to be controlled (geometry, building and physics);
- Providing measurement values xₘ of the specific system as the input variables, wherein the measurement values xₘ correspond to conditions and/or correspond to a behavior of the specific system;
   ∘ the measurement sensors that measure the xₘ can be temperature sensors, wind sensors, pressure sensors, water sensors, and/or cameras, in particular, cameras can also be used if the specific system is a traffic network to count vehicles over time or count people within the building if the specific system is building;
   ∘ if the measurement data is being time resolved, is also possible to get information about the "behavior" of the building; for example, how fast a building heats up under certain sun radiation value;
   ∘ the number of sensors depends on the kind of specific system and/or on the level of accuracy that shall be achieved. In particular, detachable sensors can be used to generate the measurement values xₘ. In the case of the building, one could use nine sensors per wall side and one sensor in the middle of the room; in the case of a traffic network one could use one camera and each crossroads. In the case of the traffic network one could also use data from network providers, when mobile communication capable devices of the car of the user within the car connects to base stations;
- Using the measurement values xₘ of the specific system by a fitting algorithm to fit the adjustable parameters aᵢ of the raw-model f(aᵢ, xₘ ) to the specific system as to obtain the optimized parameters a₁ of a fitted-model f(a₁, xₘ) of the specific system;
   ∘ after this optimization process by the fitting algorithm the adjustable parameters aᵢ become the optimized parameters a₁, which "now" describe the specific system and are adapted to the specific system; a₁ can be a single parameter, a vector of parameters or a set of parameters; Hence, a₁ can be the thickness of a certain wall;
   ∘ the fitting process can yield a standard deviation of a₁, if this standard deviation is larger than a predefined threshold, this indicates that the measurement values might not have been enough regarding the number or regarding the accuracy to describe the system sufficiently well; in this case it is possible to perform further measurements to obtain better or more measurement values xₘ;
   ∘ spatial and/or temporal resolution of the fitting process can be defined. For example, i) the spatial resolution of the parameters can be 1 mm³ and the temporal resolution can be one minute for the use case of buildings; ii) the spatial resolution of the parameters can be 1 m² and the temporal resolution can be 1 s for the use case of traffic networks;
   ∘ fitted-model f(a₁, xₘ) will also be named white box model within the context of the invention;
- Using the fitted-model f(a_{1,}, xₙ) of the specific system to generate simulated values Sₙ by using different sets of input variables xₙ that characterize the conditions and/or characterize the behavior of the specific system;
   ∘ this step is used to generate a sufficiently large number of simulated values Sₙ which are necessary to train a machine-learning-model M. As the fitted model fitted-model f(a_{1,}, xₙ) now describes the specific system because of the optimized parameters a₁, it is possible to generate the large number of simulated values Sₙ = f(a_{1,}, xₙ) by computer which is much more efficient than during this process only by measurements. For example, to account for "all" likely weather conditions that can influence the conditions of building, one would have to do the measurements roughly for the duration of one year. a computing unit can stimulate the corresponding values much faster; for example, an input parameter xₙ can be the order temperature of 10°C, wherein Sₙ yields the corresponding temperature inside at least one room of the building; Hence, different input parameters are used to get different outcomes of S;
- Using the simulated values Sₙ to generate the trained machine-learning-model M as to model the specific system.
   ∘ the training data for the machine-learning-model M is as input data the input parameter xₙ₁, wherein Sₙ₁ is the corresponding outcome data; this characterizes how the specific system behaves under different conditions: 1) input data xₙ₁ →(training) outcome Sₙ₁; 2) input data xₙ₂ →(training) outcome Sₙ₁; ..., n) input data xₙₙ →(training) outcome Sₙₙ, wherein the number n needs to be adapted to the specific system in order that the trained machine-learning-model M can describe the specific system;

This provides the advantage that even unique specific systems can efficiently be described by the trained machine-learning-model M, which can then be used to protect the behavior of the unique specific system very efficiently and in a very flexible way. It is another advantage of the invention that it combines a functional description of the specific system and a machine-learning-model M description in a synergetic way by combining the advantages of both approaches and using their drawbacks. The machine-learning-model M can then be used to optimize the specific system according to certain criteria, for example to optimize the energy management of the building. In principle, this invention provides a kind of universal approach that can be used to all kinds of specific systems that can be described by their physical properties, in particular if the condition or the behavior of the specific system can also be measured.

In an embodiment, the specific system is a traffic network, a power plant, a cement plant, an ecosystem, and/or a waste water treatment unit. For example, traffic networks and ecosystem can both be described by differential quotations, wherein the number of cars or species can be counted by cameras or sometimes even manually. Measuring values that describe the power plant can be the energy output as a function of the generation of energy (for example the burning of coal).

In an embodiment, the specific system is a building. The description will mainly focus on describing this use case. Buildings are well suited for the application because every building is a kind of unique, can easily be described in a functional way and the necessary measurements can easily be obtained. Furthermore, optimizing buildings with respect to their energy consumption has a great potential regarding environmental protection.

In an embodiment, the adjustable parameters aᵢ comprise properties of building components like material, thickness, air permeability, isolation, reflectivity and/or a window area.

All these parameters and in particular the combination of these parameters has an influence on the room temperature within the building. For example, the reflectivity with respect to radiation can be changed by the color of the building wherein a white colored building reflects more light that results in less heating of the building as if the building is colored in black. The larger the area of window is the more light gets into the building that results in heating of the building - on the other side, depending on the isolation of the window heat can also leave the building through the window, due to their physical properties the other adjustable parameters aᵢ have similar technical effects. In principle, the specific system is described more accurate the more adjustable parameters aᵢ are used. The fitting process also enables to find the right parameters a₁ even if some properties cannot be measured for example without destroying the building. A wall can consist of two layers of different material wherein the two materials unknown but not the respective thickness of layers. In principle, the modeling allows any number of layers. In one embodiment, a concrete layer with a corresponding heat capacity is used as the "storage" and an insulation layer as the "resistance". By varying the two variables of storage and resistance, corresponding heating and cooling behavior can be mapped.The fitting process is in principle capable to find the respective thicknesses of the layers if the thermal conductivity properties of the layers are known. Theoretically, the process could also be carried out as follows: Determine wall thicknesses and fit the heat capacity and heat transfer coefficients.

In an embodiment, possible values of the adjustable parameters aᵢ are given as a solution space, wherein the fitting algorithm takes a value from the solution space as the optimized parameters a₁.

The solution space lists possible values for the adjustable parameters are aᵢ along with the spatial and/or temporal resolution of these parameters. the fitting algorithm evaluates one of these values as being the optimized parameters are a₁. Providing a possible solution space has the beneficial effect regarding the fitting algorithm that it becomes more efficient (as the fitting process has a promising starting point) and that it does not produce unrealistic optimized parameters a₁ that actually do not occur within the specific system, in particular within the building.

In an embodiment, the measurement values xₘ of the specific system are obtained when the properties of the building are not artificially impacted, in particular the building is unheated and uncooled. Hence, the measurement values are not influenced by "active" interaction on the building. Those conditions can also be described as so-called "freefall conditions".

This provides the advantage of being able to get the real parameters a₁ of the building which are not falsified by human interaction. This can also provide the advantage of being able to get the real parameters a₁ of the building which are not falsified by unquantifiable heating or cooling energy. This would require an energy balance to be drawn up for the heating system, which is almost impossible with the available data. Therefore, you look for times when these values are virtually zero and fall out of the equation.

In an embodiment, the input variables Sₙ are created in a random fashion. in particular by creating the xₙ in a random fashion Sₙ = f(a_{1,}, xₙ).

This provides the advantage that the machine-learning-model can efficiently be trained with a data set that does not show an artificial preference regarding certain conditions, in particular environmental conditions. This is important to adjust the neural network efficiently as almost all possible conditions can be taken into account.

In an embodiment, a number of the input variables Sₙ is between 5 and 20, in particular 10. In particular in a combination with many consecutive time steps.

This has the advantage that the higher the number of features, the more difficult it is to teach the black box model, which are the relevant control variables.

One tries to build the simplest possible white box model with few fitting parameters that behaves thermally similar to a certain heating zone of the real world building. One can use this to calculate training data. The black box model is then simply set to the features: weather_outdoor_temperature, weather_windspeed, weather_radiation, weather_cloud_cover, ..., Indoor temperature, Heating power 0...100%, Cooling power 0...100%, trained. The optimizer has a heating / cooling power as output, which we then translate into plant set point.

In an embodiment, selected sensors remain within the specific system to obtain further measured values x_{f} of the specific system and to compare the further measured values x_{f} with the corresponding output S_{f} of the trained machine-learning-model M, wherein the machine-learning-model M is re-trained if the deviation between S_{f} and x_{f} is larger than a threshold value.

This provides the advantage that the trained machine-learning-model M can be improved even after a first training and during operation, the threshold value provides the advantage that a re-training (which consumes computational power) is only performed if the compliance between the model M and the measurements is not well enough. The threshold value can be that the deviation is more than 5%. If only selected sensors are used, provides the advantage that the number of sensors can be reduced compared to the number of sensors that performed the initial measurements for the fitting algorithm. Even with the initial setup, it is possible to work with just a handful of sensors. This is where the advantage of the white box model becomes clear. A cleverly selected sensor that serves as a reference variable for a heating circuit of a central heating system is sufficient. The white box model can then be fitted for the corresponding heating circuit zone. The case is different for individual room control. It is assumed that this re-training can be performed with less sensors than the initial measurements.

In an embodiment, an objective function is defined, wherein input variables y of the objective function are evaluated by using the trained machine-learning-model M as to minimize the objective function, wherein the input variables y_{Min} that yield in a minimized objective function represent an optimized condition of the specific system with respect to an optimization criteria Steering signals can be generated based on y_{Min} that are configured to set the specific system into the optimized condition.

The optimization criteria of the objective function can be minimizing energy consumption, minimal travel time per vehicle, minimal costs for operating the specific system and/or minimizing CO2 emission. The input variables y can comprise an energy consumption variable, traveling time variable, cost variable, CO2 variable, boundary conditions and/or at least subset of input variables xₙ. For example, a simplified version of y can look like y = (Energy consumption, outdoor temperature, energy sources, minimal temperature inside the room). y can then be optimized with respect to the optimization criteria to minimize the energy consumption of the specific system while maintaining the minimum temperature inside the room. For example, a further simplified version of y that is to be minimized can look like y(Q,V) = k*Q + l*V, with k and l being weights, Q: Energy consumption; V: violation of comfort temperature (20-26°C).

Further explanation regarding this embodiment, in particular further examples variables y, will follow below.

This provides the advantage of being able to get the specific system into the optimized condition as to make the specific system more efficient. In particular, this can be performed in an automated way without human interaction. How often the specific system is being set into the optimized condition depends on the kind of specific system. For example, in case of traffic networks or buildings, the optimized condition can be evaluated every five minutes and the steering signals can be generated accordingly.

According to a second aspect of the invention a usage of a trained machine-learning-model M according to claim 1 to optimize a setting of a specific system, in particular a HVAC setting, is disclosed by performing the following steps:
- Defining an objective function, wherein input parameters y of the objective function are evaluated by an optimization algorithm that uses the machine-learning-model M as to minimize the objective function, wherein the input parameters y_{Min} that yield in a minimized objective function represent an optimized condition of the specific system, wherein steering signals are generated based on the input parameters y_{Min};
- Providing the steering signals to a steering unit that sets the specific system into the optimized state.

This provides the advantage that the specific system and get to its optimized state.

In an embodiment, the optimization algorithm is a genetic algorithm. The genetic algorithm is a beneficial choice to be used as an optimization algorithm for current case because of the following properties of a genetic algorithm:
A genetic algorithm (GA) is a search heuristic inspired by the principles of natural selection and genetics. It is used to find approximate solutions to optimization and search problems. The core properties of a genetic algorithm include a population of individuals, selection based on fitness, crossover (recombination), and mutation. Initially, a population of potential solutions is generated randomly. Each individual in the population is evaluated using a fitness function, which determines how well it solves the problem at hand. Individuals with higher fitness are more likely to be selected for reproduction.

The reproduction process involves crossover, where two parent solutions combine to produce offspring, and mutation, where random changes are introduced to the offspring to maintain genetic diversity. Over successive generations, the population evolves, with the fittest individuals more likely to survive and propagate their traits, thereby guiding the search towards optimal or near-optimal solutions.

One of the primary advantages of genetic algorithms is their robustness in handling complex optimization problems, especially those with a large search space and many local optima. GAs are less likely to get stuck in local optima compared to traditional optimization methods because they maintain a population of solutions rather than a single solution, allowing for exploration of multiple regions of the search space simultaneously.

Additionally, genetic algorithms do not require gradient information or other problem-specific knowledge, making them versatile and applicable to a wide range of problems, including those that are not well-suited to traditional methods like gradient descent. They are also inherently parallel, as evaluations of the fitness function for different individuals can be performed independently, making them suitable for implementation on parallel computing architectures.

Furthermore, GAs can handle discrete, continuous, and mixed-variable optimization problems, and they can be easily hybridized with other optimization techniques to enhance performance. The use of genetic algorithms can lead to innovative solutions that might not be discovered through conventional approaches, due to their ability to explore diverse regions of the solution space.

In an embodiment, the input variables y comprise energy source capacities, distance to energy sources, energy costs, weather data, number of people within the building or road users, HVAC settings, boundary conditions and/or CO2 Output. In particular, at least a subset of these variables can be time-dependent like: a time-dependent energy source capacities, time-dependent weather data, time-dependent battery status, time-dependent energy costs, time-dependent weather data, time-and space-dependent number of people within the building, HVAC setting, boundary conditions and/or time-dependent CO2 Output.

This provides the advantage that the objective function can be optimized in a very flexible way, in particular regarding to environmental aspects. For example, under the boundary condition that during office times the temperature shall not be more than 24°C, it can be evaluated that during nighttime - due to the time-dependent energy source capacities information - no energy from solar panels is available. This can lead to the steering signals that the cooling system uses energy from solar panels from 18 pm to 21:30 pm as to cool down the building "for the next day". In a similar way, the time - dependent whether data helps to predict if green energy sources are available at a certain time point. The number of people can be observed with cameras, can be obtained from timetables, and/or usage of computers. As every human produces around 100 W, the number of people and the location where people are can be considered as an energy source.

According to a third aspect of the invention, a computing unit configured to carry out the steps of the method according described above and/or configured to carry out the steps of the usage according to claims described above.

The advantages are in principle analog to those described within the context of the method.

The computing unit can comprise appropriate interfaces to receive the functional raw-model, the measurement values, and to send steering signals to the steering unit. The computing unit is configured to perform the fitting algorithm and to generate Sₙ and/or the trained machine-learning-model M as to model the specific system.

The advantages are in principle analog to those described within the context of the method.

According to a fourth aspect of the invention, a computer program is disclosed comprising instructions which, when the program is executed by a computer, cause the computer to carry out the steps of the method of claim described above or the steps of the usage according to claims described above.

The advantages are in principle analog to those described within the context of the method.

According to a further aspect of the invention, a system is disclosed that is configured to carry out the steps of the method of claim described above or the steps of the usage according to claims described above. The system can comprise the computing unit described above, sensors configured to measure the measurement values xₘ, is steering unit to execute the steering signals, and/or depending on the use case i) the HVAC of the building, ii) the traffic network of a certain region, iii) the power plant, iv) the cement plant, vi) the ecosystem, and/or a vii) the waste water treatment unit.

The advantages are in principle analog to those described within the context of the method.

In the following, preferred implementation examples of the present invention are explained with reference to the accompanying figure:
- Fig. 1:: shows a system according to the invention configured to control settings of the specific system in the embodiment of a building;
- Fig. 2:: shows a white box model fitted to freefall conditions of the building;
- Fig. 3:: shows a comparison between the results of the white box model versus the trained black box model;
- Fig.4:: shows an improvement regarding energy efficiency in the case of an inlet flow temperature;
- Fig. 5: shows a first front-end design for the building energy management system;
- Fig. 6: shows the method of the invention according to a further embodiment;
- Fig. 7a:: heterogeneous heating up operation without smart thermostats;
- Fig. 7b:: homogeneous heating up operation with smart thermostats;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

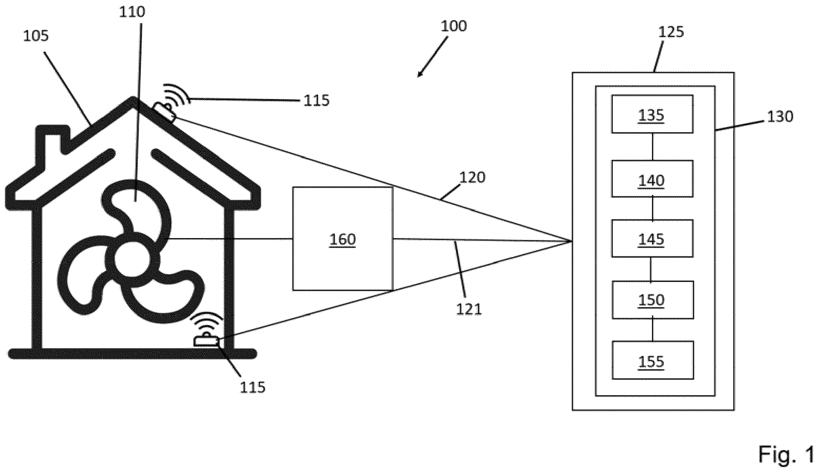

Fig. 1 shows a system 100 according to the invention configured to control settings of a specific system 105.

The system 100 explains the concepts of the invention in the embodiment that the specific system 105 is the building 105. The building 105 comprises a HVAC unit 110, in particular configured to cool and/or to heat the building 105. Measurement sensors 115 are located inside and/or outside the building 105 to obtain measurement values x_{M} that characterize the state of the building 105.

The measurement sensors 115 can provide the respective measurement values x_{M} via a communication link 120 to a computing unit 125. A computer program 130 implemented on the computing unit 125 can be configured to cause the computer to carry out the following steps:
- Step 135: Providing a functional raw-model f(aᵢ, x) of the specific system, wherein the raw-model comprises adjustable parameters aᵢ and input variables x;
- Step 140: Providing measurement values xₘ of the specific system as the input variables, wherein the measurement values xₘ correspond to conditions and/or correspond to a behavior of the specific system;
- Step 145: Using the measurement values xₘ of the specific system by a fitting algorithm to fit the adjustable parameters ai of the raw-model f(aᵢ, xₘ ) to the specific system as to obtain the optimized parameters a₁ of a fitted-model f(a₁, xₘ) of the specific system;
- Step 150: Using the fitted-model f(a₁, xₙ) of the specific system to generate simulated values Sn by using different sets of input variables xₙ that characterize the conditions and/or characterize the behavior of the specific system;
- Step 155: Using the simulated values Sₙ to generate the trained machine-learning-model M as to model the specific system.

After the machine-learning-model M is trained, the following steps can also be executed by the computer program 130:
- Using an objective function, wherein input variables y of the objective function are evaluated by an optimization algorithm - that can also be implemented by using the computer program 130 - that uses the machine-learning-model M as to minimize the objective function, wherein the input variables y_{Min} that yield in a minimized objective function represent an optimized setting of the specific system, wherein steering signals are generated based on the input parameters y_{Min};
   ∘ The objective function can be defined in the previous step, for example by experts of the specific system;
- Providing the steering signals to a steering unit that sets the specific system into the optimized state.

By using a further communication link 121, the steering signals can be sent to a steering unit 160 that controls the HVAC unit 110 of the building 105 as to optimize the performance of the building 105.

The optimization of energy in the building sector serves as a powerful tool for achieving a dual objective: reducing both energy costs and CO2 emissions. This inventive symbiotic approach points out the inherent connection between economic efficiency and environmental responsibility.

The strategies that drive cost-effective energy management are intrinsically linked to the mitigation of CO2 emissions. As the optimization process can streamline operations, minimizes energy wastage, and promotes the use of renewable energy sources, the carbon intensity of energy consumption decreases. This dual impact underscores the environmental responsibility embedded in the pursuit of economic efficiency, emphasizing that energy and emission cost reduction align.

The adoption of data-driven approaches (Digital Energy Twin) and advanced control strategies (Concept of Model Predictive Control) not only fulfills environmental responsibilities but also positions entities favorably in terms of regulatory compliance and corporate social responsibility. This alignment contributes to the energy and emission cost reduction as part of a sustainable business strategy where even price-driven operations in a demand side management scenario (Multi Target Operations) are part of a profound product vision.

The collective impact of widespread energy optimization extends beyond individual buildings and organizations. As the building sector actively engages in energy and emission cost reduction practices, it becomes a meaningful contributor to the global effort to mitigate climate change. The effect of reduced energy consumption and lower carbon emissions positions energy optimization as a key player in the collective response to environmental challenges on a global scale.

In conclusion the symbiotic relationship between energy cost savings and CO2 emission mitigation is evident: Through the adoption of optimized energy management practices, the building sector and thus the Real Estate portfolio of companies not only achieve financial benefits but also play a crucial role in addressing the broader environmental imperative of reducing carbon emissions and strengthening sustainability.

The trained machine-learning-model M for buildings, also called the Digital Energy Twin, that combines deterministic and machine learning modeling, offers advantages in optimizing energy management and improving overall building performance. As for accuracy in simulation and prediction deterministic models provide a solid foundation for simulating thermal processes within a building. Machine learning models enhance accuracy by learning from real-world data such as weather forecast data, building control data and room sensor data (occupancy, temperature, and humidity), improving the precision of predictions over time. The Digital Energy Twin allows for continuous monitoring and optimization of energy consumption based on real-time data. It enables the identification of inefficiencies and suggests improvements to reduce energy waste. Predictive analytics from machine learning models can forecast equipment failures or maintenance needs. Maintenance schedules can be optimized to prevent downtime and extend the lifespan of building systems. The Digital Energy Twin provides real-time insights into building performance. It allows for immediate adjustments to systems and controls to respond to changing conditions and requirements.

Machine learning models can adapt to changing patterns and conditions, ensuring the system remains effective and accurate over time. The system can evolve based on new data and insights, improving its performance continuously. The combination of deterministic and machine learning models facilitates data-driven decision-making processes. Decision-makers can rely on accurate and up-to-date information for strategic planning and resource allocation. The Digital Energy Twin can be customized to the specific characteristics and requirements of individual buildings. Tailoring the model to the unique features of each building enhances its effectiveness. By optimizing HVAC and lighting systems, the Digital Energy Twin contributes to maintaining a comfortable and productive indoor environment for occupants.

This approach can be called a gray box model.

A gray box model, also known as a semi-empirical model, is a type of model used in various fields, including engineering, economics, and control systems, that combines both theoretical (white box) and empirical (black box) approaches. This hybrid approach takes advantage of the strengths of both pure data-driven and purely theoretical models.

### Characteristics of Gray Box Models

### 1. Hybrid Approach:

- White Box (Theory-based): Utilizes known physical laws, equations, and principles to describe a system. These models are based on fundamental understanding and can predict behavior under various conditions.
- Black Box (Data-driven): Relies purely on empirical data and statistical or machine learning methods to model the system without requiring an understanding of the underlying processes.

### 2. Structure:

- A gray box model can integrate theoretical equations where applicable and supplements them with empirical data where the theoretical understanding is incomplete or where data can significantly enhance accuracy.

### 3. Applications:

- Engineering: Often used in control systems, process modeling, and systems engineering where some system dynamics are well understood but others need empirical data to fully characterize;
- Economics: Combines economic theories with statistical data to forecast economic indicators or outcomes;
- Environmental Science: Models natural systems by combining physical laws (e.g., hydrology equations) with observational data.

### Advantages of Gray Box Models:

1. Improved Accuracy: By combining theoretical models with real-world data, gray box models can achieve higher accuracy than either approach alone.
2. Flexibility: These models can adapt to new data and refine predictions as more information becomes available.
3. Interpretability: They provide a balance between interpretability (from the theoretical part) and predictive power (from the empirical part).

The following explanations are focused with respect to the use case that the specific system is the building 105:
The white box model, which is the fitted-model f(a₁, x), involves modeling a technical system using systems of equations. For instance, it depicts the physical mechanisms of thermal radiation, convection, and conduction. Describing the mechanism data such as wind, sun, and external temperature with the building envelope (including geometry, building materials, wall thicknesses, window areas) is needed to be described as complex systems of equations for simulation purposes. The relevant parameters shall be accurately determined and incorporated into the model. This process can be highly labor-intensive, and computation times for white box models can be quite lengthy. The following "Modelica" code shows a simple implementation of a building model:

```
       model BuildingThermalModel
        // Parameters
        parameter Real surfaceArea = 100.0; // in square meters
        parameter Real wallThickness = 0.2; // in meters
        parameter Real thermalConductivity = 1.5; // in W/(m*K)
        parameter Real initialTemperature = 20.0; // in degrees Celsius
  
        // Variables
        Real indoorTemperature(start = initialTemperature);
        Real outdoorTemperature = 25.0;
       // Assume constant outdoor temperature
       // Thermal conduction
       Real heatConduction;
       equation
         heatConduction = thermalConductivity * surfaceArea *
       (indoorTemperature - outdoorTemperature) / wallThickness;
  
       // Thermal convection (simplified)
        Real heatConvection;
        parameter Real convectiveHeatTransferCoefficient = 5.0;
       // in W/(m^2*K)
       equation
         heatConvection = convectiveHeatTransferCoefficient *
       surfaceArea * (indoorTemperature - outdoorTemperature);
  
        // Thermal radiation (simplified)
        Real sigma = 5.67e-8;
       // Stefan-Boltzmann constant in W/(m^2*K^4)
       Real emissivity = 0.9; // Surface emissivity
        Real heatRadiation;
        equation
         heatRadiation = emissivity * sigma * surfaceArea *
       (indoorTemperature^4 - outdoorTemperature^4);
       // Total heat transfer
       Real totalHeatTransfer;
       equation
         totalHeatTransfer = heatConduction + heatConvection +
       heatRadiation;
  
       // Building thermal dynamics
       der(indoorTemperature) = totalHeatTransfer;
       end BuildingThermalModel;
```

This simple "Modelica model" represents a building's thermal behavior. It comprises the parameters aᵢ for surface area, wall thickness, thermal conductivity, and initial temperature. The model incorporates equations for thermal conduction, convection, and radiation, and it simulates the temperature dynamics inside the building. Of course, more sophisticated models comprising more parameters aᵢ are possible.

A data-driven approach is utilized for parameter fitting of the white box model. An existing simulation model for buildings is employed, which accurately represents all physical relationships but has not been parameterized for the specific building to be controlled (geometry, building and physics), this model is the functional raw-model f(aᵢ, x). This model simply depicts a basic building or a single room/container with a building envelope.

A library allows to define construction elements (walls, basement, ceiling, ...) with different predefined materials. The following code snippet shows an example of the material properties of concrete:
name="Concrete (Beton)", lambda=1.94,
c=776,
rho=2104

For the optimization process, a wall configuration comprising two layers, concrete and superinsulation, can be selected. This configuration enables the optimization process to adjust the thermal inertia and heat transfer characteristics of the wall by varying the thickness of each layer if the measurement values xₘ are given to the fitting algorithm. This methodology extends to both inner and outer walls, ceilings, false ceilings, and basements. Other parameters for optimization/adjustment can be window properties, including size per orientation, U-values, and solar transmission or air exchange rates.

Through this parameter optimization/ adjustment by the fitting algorithm, attain highly accurate fitting results can be obtained. If further adjustments are required, any parameter within the white box model can be fine-tuned, e.g. using a genetic algorithm.

For example, the following parameters can be optimized for the white box model to get the respective parameters for a building:

### Outer wall

'outer_wall_1' : list(np.arange(0.05, 0.51, 0.05)),
'outer_wall_2' : list(np.arange(0.05, 0.51, 0.05)),
'inner_wall_1' : list(np.arange(0.05, 0.51, 0.05)),
'basement_1' : list(np.arange(0.05, 0.51, 0.05)),
'basement_2' : list(np.arange(0.05, 0.51, 0.05)),
'ceiling_1' : list(np.arange(0.05, 0.51, 0.05)),
'ceiling_2' : list(np.arange(0.05, 0.51, 0.05)),
'false_ceiling_1' : list(np.arange(0.05, 0.51, 0.05)),
'window_b0' : list(np.arange(0.1, 1, 0.1)),
'window_g' : list(np.arange(0.25, 0.91, 0.05)),
'window_area_perc_N' : list(np.arange(0.05, 1, 0.05)),
'window_area_perc_W : list(np.arange(0.05, 1, 0.05)),
'airchange' : list(np.arange(0, 0.21, 0.05)),
'window_u' : list(np.arange(0.8, 1.61, 0.4));

'outer_wall_1' represents of first layer of a first material of the outer wall, and
'outer_wall_2' represents of second layer of a second material of the outer wall.

By providing the measurement values xₘ of the building to the fitting algorithm, the thickness of the first and/or the second layer can be obtained from the values of the solution space list(np.arange(0.05, 0.51, 0.05)).

Hence, the objective is to fit this model in such a way that the parameters, e.g. the room temperature, of the model aligns with the measurement values xₘ, e.g. the measured temperature in the actual building. The measurement values xₘ data are measured during time periods when the building was is unheated and/or uncooled, essentially during free-fall conditions.

Using a genetic algorithm, parameter sets for the white box model are generated, and free-fall intervals are simulated. The objective function of the genetic algorithm is the difference of the simulated temperature from the measured temperature.

Only a minimal amount of data from these 'free-fall' intervals is required to achieve very good results. The thus-fitted white box model ideally represents the real building with respect to weather influences.

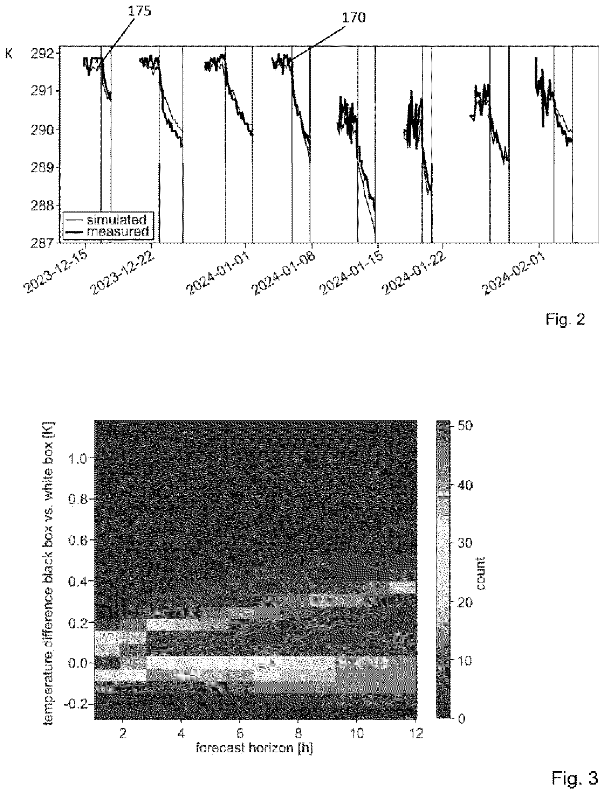

Fig. 2 shows a white box model fitted to freefall conditions of the building. The y-axis shows the temperature in Kelvin and the x-axis different days. In general, the curves show a satisfying agreement of the simulated values 170 and the measured values 175.

Therefore, time-costly researching and mapping of needed building parameters is no longer required - in particular if the building is already in usage. Significantly reducing the high implementation effort, this approach is unique of its kind and highly promising when it comes to scalability.

However, a white box model is computationally intensive. To cope with computational inefficiency the machine-learning-model M is used. The machine-learning-model M is also called the black box model.

The machine-learning-model M is usually trained based on historical measurement data in which the relationships between input data and the target variable are not explicitly known or interpretable. Instead, patterns for predicting new data are learned. Two significant challenges arise in this context. While historical weather data for a building is easy to obtain, historical data for room temperatures over extended periods are rarely available, and the quantification of heating energy - temporally and spatially resolved - is impossible. This leads directly to the second challenge. If the influences of input variables (heating energy, weather) on the target variable (room temperature) are not learned in a manner that captures the underlying physical relationships, implementing control with the learned model becomes problematic. For instance, the impact of heating energy on room temperature may be assigned minimal weight, while the black box model might focus on weather influences or even the pure sequence of room temperature fluctuations in daily and weekly cycles.

The following code shows an example of the training of the machine-learning-model M, in particular a simple recurrent neural network, which is based on the DeepAR approach:

```
       # Define the RNN model
       model = RNNModel(
             n_epochs=self. config. num_epochs,
             random_state=self. config. random_state,
             batch_size=self.config.batch_size,
             inp_ch_lgth=inp_ch_lgth,
             out_ch_lgth=out_ch_lgth,
             n_rnn_layers=n_rnn_layers,
             hidden_dim=hidden_dim,
             likelihood=GaussianLikelihood(),
             dropout=dropout,
             save_checkpoints=True,
            force_reset=True,
            pl_trainer_kwargs=pl_trainer_kwargs,
           model="LSTM",
      model_name=f"model_{self.model_name.format(inp_ch_lgth=inp_ch_lg
      th)}",
      work_dir=MODELS_FOLDER,
      )
      model.fit(
      series=self.train_target,
      future_covariates=self.train_features,
      val_series=self.val_target,
      val_future_covariates=self.val_features,
      num_loader_workers=num_workers,
      verbose=False,
      )
      model = RNNModel.load_from_checkpoint(
      f"model_{self.model_name.format(inp_ch_lgth=inp_ch_lgth)}",
      work_dir=MODELS_FOLDER,
      )
      predicted_output = model.historical_forecasts(
      self.all_target,
      future_covariates=self.all_features,
      start=1 - self.config.split_percentage,
      forecast_horizon=out_ch_lgth,
      stride=out_ch_lgth,
      retrain=False,
      num_samples=num_samples,
      last_points_only=False,
      )
```

In the model.fit (), the simulated values S_{N} are used to train the machine-learning-model M.

This example uses a simple RNN to predict the next value in a time series based on a sequence of past values. In the following, the combination of both - white and black box modelling - is illustared as the overall approach on handling incomplete data availability. In the further course, this approach is called grey box modelling or the trained machine-learning-model M.

To illustrate two influence factor groups, weather, and heating power, as distinctly as possible in the training dataset, historical weather data for one year can be concatenated ten times and simulated with randomly generated time series as the input values xₙ for heating power in the white box model. This ensures that repeating weather influences with varying heating powers coincide in the training dataset, allowing for optimal learning of the relationships between the two influence factor groups.

Fig. 3 shows a comparison between the results of the white box model versus the trained black box model. The results demonstrate that the black box model trained in this manner provides nearly identical computational results to the white box model, while requiring only a fraction of the computation time. The efficient computational time of the trained-machine-learning model M is a key element for a system, which must be capable for operation in real-time.

The adaptability of the approach to diverse specific systems, in particular building types, and operational conditions positions it as a versatile solution for achieving energy savings and promoting sustainability.

After having generated the trained-machine-learning model M, this model can be used to generate steering signals by incorporating that Model into a Concept for Model Predictive Control (MPC). The MPC can set new standards for energy efficient and responsive building operations.

### Advantages of Model Predictive Control:

Compared to conventional PID control, which can only react and readjust in real-time to system changes, MPC can proactively respond to future environmental or system changes. In the domain of building HVAC, the primary future influence is the impact of weather.

A functional relationship between room temperature as a time-dependent function of weather and applied heating energy is employed. This allows, for instance, the early throttling of heating systems based on the anticipated impact of weather changes.

In this proactive approach, MPC stands out by anticipating and adjusting to variations in the environment, enabling more efficient and timely responses compared to traditional PID control. The utilization of predictive modeling facilitates the optimization of building climate control systems for enhanced energy efficiency and user comfort.

As described above, the model incorporates both physical equations, representing the thermal properties of building elements, and data-driven components derived from real-world measurements. The parameters of this model are then identified by (auto) calibration based on the data sources available (weather, room temperatures, HVAC).

Once the model set up is established, the next key aspect is the definition of the prediction horizon and the control horizon. The prediction horizon outlines the period over which future predictions are made, in this case spanning for example the next 12 hours. Simultaneously, the control horizon, a shorter timeframe, is defined to optimize control actions based on the system's response time.

To guide the optimization process, the objective function is formulated. This function can comprise the control objectives, typically aiming to minimize energy consumption and maintain comfortable indoor temperatures.

Solving an optimization problem becomes the central focus regarding the objective function. The Genetic optimization Algorithm (GA) considers the current state of the building system, predictions for future states based on the dynamic model, and the defined objective function. The goal is to determine the optimal control inputs as steering signals over the predefined control horizon. In this case, the trained machine-learning-model M, i.e. the grey box model, can use weather forecast data, past and current room temperatures, and HVAC control input data as model input to predict the future room temperatures as a measure for energy consumption and comfort. Varying the HVAC control data iteratively until the best room temperature prediction is found is ideally carried out by efficient algorithms which are suited to choose the next possible control data set in a smart way.

Doing so, the Genetic Algorithm (GA) is introduced to efficiently search for optimal control inputs over the control horizon. This evolutionary algorithm mimics the principles of natural selection and genetic crossover to explore and refine potential solutions. The process begins by initializing a population of potential solutions (1), where each solution represents a set of control inputs for the MPC system over the defined control horizon. The fitness of each solution is evaluated based on the defined objective function (2), encompassing control goals such as minimizing energy consumption and maintaining indoor comfort. This step quantifies how well each solution aligns with the optimization objectives. Solutions are selected to form a new generation (3), with a higher likelihood of selection for solutions exhibiting better fitness. This emulates the natural selection process, favoring solutions that contribute more effectively to the desired optimization outcomes. Crossover involves combining elements of selected solutions to generate new potential solutions (4). In the context of MPC, this operation is applied to control inputs, promoting the exploration of diverse combinations and strategies that may yield improved results. Mutation introduces small, random changes to selected solutions (5). This adds an exploratory element to the optimization process, preventing the algorithm from converging prematurely and allowing for adaptation to changing conditions in the building system. Steps 2-5 are repeated for multiple generations, with each iteration refining the solutions within the population. This iterative process enables the algorithm to converge towards a set of control inputs that optimize the specified objectives.

In the MPC framework, the Genetic Algorithm is integrated into the optimization step. After predicting future states using the grey box model, defining the objective function, and specifying the control and prediction horizons, the GA optimizes the control inputs. This facilitates the exploration of diverse control strategies, allowing the MPC system to adapt to varying conditions and find an optimal solution for both energy efficiency and indoor comfort within the building.

With the optimal control inputs obtained as the steering signals, the steering signals are then implemented in real-time HVAC system operation by sending them to a steering unit that controls the HVAC system. These steering signals can include setpoints for temperatures, airflow rates, and other relevant parameters to ensure the system operates in an energy-efficient and comfortable manner.

Continuous monitoring of the actual system performance is beneficial for the success of MPC. Discrepancies between predicted and actual outcomes prompt adjustments. The grey box model allows for adaptation, wherein model parameters are updated based on real-world data, enhancing prediction accuracy and overall control system performance.

This approach, combining the Grey Box Model with GA optimization to a Digital Energy Twin, is carried out automatically and serves as standalone feature, which has not been designed in a likely way as far as research results show.

In summary, the grey box model in MPC for building HVAC systems combines the best of physical and data-driven models, enabling adaptive and effective control strategies for optimizing energy consumption and maintaining indoor comfort. The step-by-step approach, from model identification to real-time implementation and continuous adaptation, ensures a robust and responsive closed loop control system.

First internal successful results, which were not made public, were already obtained. The focus has been on the optimization of a heating inlet flow temperature as control input governing several rooms to the corresponding heating circuit.

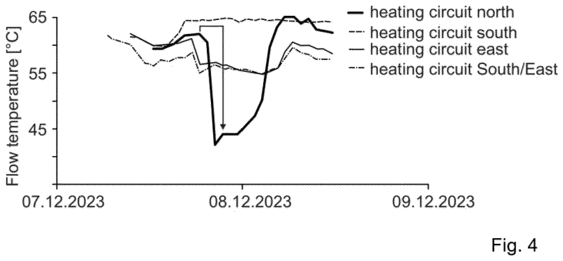

Fig.4 shows an improvement regarding energy efficiency in the case of an inlet flow temperature in a real life example.

After multiple iterations of the GA-driven optimization process, a significant achievement was observed in optimizing the inlet flow temperature north as control input out of four inlet flow temperatures of four different heating circuits. The Genetic Algorithm demonstrated effectiveness in fine-tuning this parameter, resulting in a reduced energy consumption for the time interval of the comparison. This outcome highlights the capacity of MPC to tailor control strategies for improved operational efficiency.

While the optimization efforts concentrated on a single control input in this instance, the implications for the broader system are promising. The successful reduction in energy consumption aligns with the overarching goal of creating energy-efficient and comfortable building environments, contributing to environmental sustainability. The iterative nature of the MPC-GA integration allows for adaptation and extension of these successes to other control parameters. The objective is to achieve a holistic optimization of all relevant control inputs, ensuring a comprehensive and sustainable impact on building system performance.

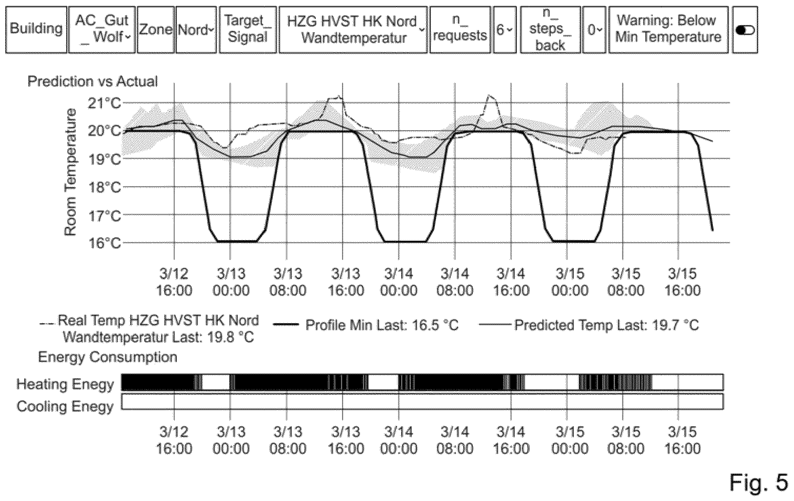

Fig. 5 shows a first front-end design for the building energy management system with an intuitive and informative interface aimed at enhancing user experience and facilitating effective decision-making. Central to the design are real-time visualizations of both predicted and actual temperature readings, providing users with valuable insights into the thermal dynamics of the building. The main dashboard of Fig. 5 prominently displays the predicted temperature trajectory based on the trained machine-learning model M, weather forecast data, allowing users to anticipate fluctuations in indoor temperature over time. This predictive feature empowers users to proactively adjust HVAC settings to maintain optimal comfort levels and minimize energy consumption.

In addition to the predicted temperatures, the dashboard also features real-time updates of actual temperature measurements from sensors deployed throughout the building. This comparison between predicted and actual temperatures enables users to assess the accuracy of the predictive model and make informed decisions about HVAC control strategies.

Complementing the temperature displays is a dynamic visualization of energy usage, indicating the current and projected energy consumption of the HVAC system. This real-time energy monitoring feature provides users with immediate feedback on the environmental impact of the building's heating and cooling operations, fostering awareness and encouraging energy-efficient practices.

The optimization of building systems, combining a grey box model with advanced control strategies, has showcased significant advancements in achieving energy efficiency and operational excellence. The orchestrated process involves the deployment of a dynamic grey box model, the utilization of a Genetic Algorithm for optimal control input identification, prediction of optimal room or zone temperatures, and a continuous learning mechanism for adaptive self-improvement. A dynamic model, combining physical principles and data-driven elements, was established for the building system. This grey box model served as the foundation for predictive control and optimization.

The GA, a sophisticated optimization tool, was seamlessly integrated into the Model Predictive Control (MPC) framework. This GA efficiently explored the solution space, identifying optimal control inputs that significantly contributed to energy savings.

Predictive capabilities were used to predict optimal targets for the building system. This involved forecasting future states based on the grey box model and the optimized control inputs identified by the GA.

The continuous learning aspect facilitated self-adaptation, creating a robust and efficient building system capable of responding intelligently to varying conditions. This comprehensive process stands as a testament to the potential of advanced control strategies in shaping the future of energy-efficient and adaptive building systems.

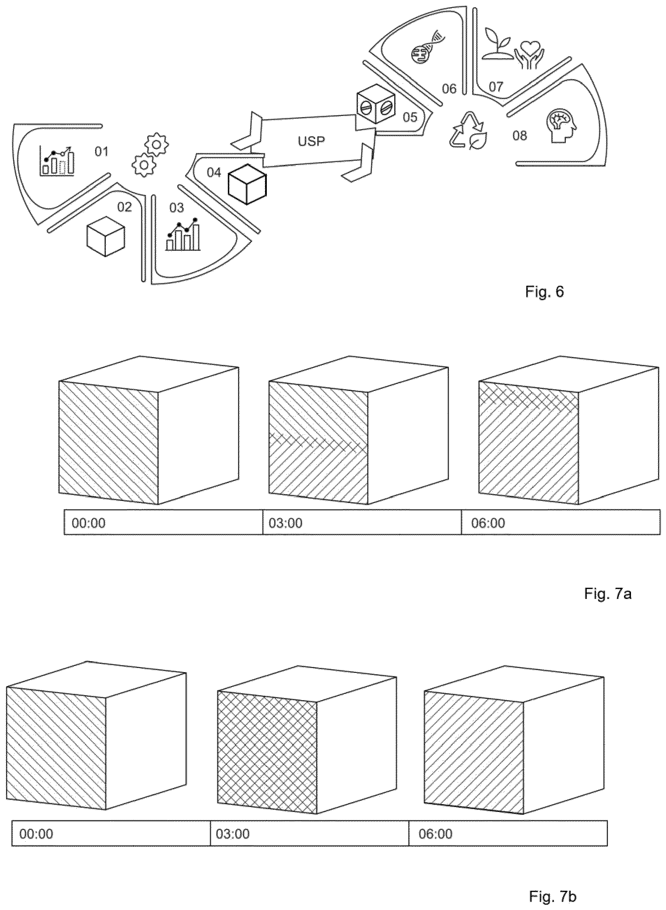

Fig. 6 shows the method of the invention according to a further embodiment:
01: structural and operational building data are often incomplete;
02: a physical white box model of the building is calibrated to the operational and environmental data;
03: using the white box model, a synthetic, complete data set is computationally generated;
04: the faster-to-operate black box model is trained to become a grey box model; "USP" stands for Unique Selling Point;
05: the fully trained grey box model of the building is put into operation;
06: a genetic algorithm determines the optimal settings for heating, ventilation, and air conditioning (HVAC);
07: the grey box model predicts the optimal targets for energy efficiency and/or user comfort;
08: in the optimized operation, the model continuously learns and improves the optimization target;

A further possible example of how to use an objective function with a trained machine learning model of a system to minimize energy consumption of that system by using a genetic algorithm is shown below:

### Scenario: Minimizing Energy Consumption of an HVAC System:

Imagine we have a building with an HVAC (heating, ventilation, and air conditioning) system. We want to minimize the energy consumption of the HVAC system while maintaining a comfortable indoor temperature.

### Steps Involved:

1. Trained Machine Learning Model: First, we train a machine learning model to predict the energy consumption of the HVAC system based on various parameters such as indoor temperature, outdoor temperature, humidity, and HVAC settings (e.g., fan speed, thermostat settings).
2. Objective Function: Define an objective function that we want to minimize. In this case, the objective function will be the energy consumption predicted by the machine learning model.
3. Genetic Algorithm: Use a genetic algorithm to find the optimal HVAC settings that minimize the predicted energy consumption.

### Step-by-Step Example:

### 1. Train the Machine Learning Model

Suppose we have historical data on HVAC settings and the corresponding energy consumption. We use this data to train a machine learning model (e.g., a regression model or a neural network).

```
       # Pseudo python-code for training a machine learning model
       from sklearn.model_selection import train_test_split
       from sklearn.linear_model import LinearRegression
       # Load historical data
       data = load_hvac_data()
       X = data[['indoor_temp', 'outdoor_temp', 'humidity', 'fan_speed',
       'thermostat_setting']]
       y = data['energy_consumption']
       # Split data into training and testing sets
       X_train, X_test, y_train, y_test = train_test_split(X, y, test_size=0.2,
       random_state=42)
       # Train a regression model
       model = LinearRegression()
       model.fit(X_train, y_train)
```

### 2. Define the Objective Function

The objective function will use the trained model to predict energy consumption based on the HVAC settings.

In python:

```
       def objective_function(hvac_settings):
       # hvac_settings = [indoor_temp, outdoor_temp, humidity, fan_speed,
       thermostat_setting]
       energy_consumption = model.predict([hvac_settings])
       return energy_consumption
```

### 3. Implement the Genetic Algorithm

We'll use a genetic algorithm to find the HVAC settings that minimize the predicted energy consumption.

In python:

```
      import numpy as np
      from scipy.optimize import differential_evolution
      # Define the bounds for each parameter
      bounds = [
      (18, 25), # indoor_temp (°C)
      (0, 40), # outdoor_temp (°C)
      (20, 80), # humidity (%)
      (1, 3), # fan_speed (1-3)
      (18, 25) # thermostat_setting (°C)
      ]
      # Use differential evolution (a type of genetic algorithm) to minimize the
      objective function
      result = differential_evolution(objective_function, bounds)
      # Optimal HVAC settings
      optimal_hvac_settings = result.x
      optimal_energy_consumption = result.fun
      print(f"Optimal HVAC settings: {optimal_hvac_settings}")
      print(f"Predicted minimal energy consumption:
      {optimal_energy_consumption}")
```

### Explanation:

1. Bounds: Define the range of possible values for each HVAC setting.
2. Differential Evolution: This is an optimization algorithm inspired by the principles of natural evolution. It tries to find the global minimum of the objective function by iteratively improving a population of candidate solutions.
3. Optimal Settings: The result of the differential evolution gives us the HVAC settings that minimize the predicted energy consumption.

### Summary

By combining a trained machine learning model with a genetic algorithm, one can effectively minimize energy consumption in a system. The machine learning model predicts energy consumption based on various settings, and the genetic algorithm searches for the optimal settings that result in the lowest energy consumption. This approach can be applied to various systems beyond HVAC to optimize performance and efficiency.

### Further Application fields

In traditional heating systems, static hydraulic balancing is employed to ensure even distribution of hot water to different radiators or zones. This process involves manually adjusting valves and flow regulators to achieve the desired flow rates in each branch of the system. By balancing the flow rates, static hydraulic balancing ensures that each radiator receives the appropriate amount of hot water for efficient heating.

Static hydraulic balancing typically requires calculations based on factors such as pipe lengths, diameters, and the number of radiators in each branch. Once these calculations are made, valves are adjusted manually to achieve the desired flow rates. However, this process is often time-consuming and may require periodic readjustment as conditions change.

While static hydraulic balancing has been effective in maintaining heating system performance, it lacks the adaptability and efficiency of more modern approaches. With the advancements in smart technology and centralized control systems, adaptive hydraulic balancing has emerged as a more dynamic and convenient solution for optimizing heating system performance.

Therefore, the described MPC approach facilitates the management of building cooldown during non-utilization hours, necessitating efficient heating before business hours. Steep heat up operations may result in a not equally distributed temperature increase within the building as shown in Fig. 7a.

Through the implementation of the described predictive control model, future indoor temperatures can be predicted. This predictive capability serves as a valuable tool during the heating phase, allowing smart thermostats to synchronize the building's heating process effectively as shown in Fig 7b. Hence, the setpoints of the thermostatic valves can be increased step by step in? 16.5, 17, 17.5, etc. This ensures that rooms that are already at 19 degrees do not receive any heating output while other rooms are still at 16 degrees.

Employing this predictive model results in a lower final maximum temperature requirement. This is because excessively high inlet temperatures, typically used to compensate for poorly performing heaters on upper floors, are no longer necessary. This approach offers two significant options for energy savings: 1. Longer shutdown periods of the heating system due to "as steep as possible" ramp ups. 2. Lower average temperatures (room temperature and inlet temperatures) due to evenly distributed heat.

### Way Forward

To optimize building operations and reduce CO2 emissions, the model predictive control (MPC) system is already internally deployed for two buildings, prospectively also replacing two contracted external solutions. Scheduled for implementation in early 2025, this initiative represents a strategic shift towards sustainable and self-reliant building management.

So far, the focus lies on optimizing operations with respect to weather condition (outer influences) and utilization (inner influences). Another idea is to combine this approach with a third boundary condition: demand side management (outer influence). In this context, the algorithm can receive an information of energy prices (actual and forecasted) to make heating or cooling ramp ups more flexible by using the thermodynamic storage behavior of the buildings.

In principle this model predictive control approach is not only applicable for the technical process of buildings. Other industry processes or verticals (e.g. Power Plants, cement plants or waste water treatment units) can be equally targeted for the described Model Predictive Control approach.

## Claims

1. A method to generate a trained machine-learning-model M that models a specific system comprising the following steps:
• Providing a functional raw-model f(aᵢ, x) of the specific system,
wherein the raw-model comprises adjustable parameters aᵢ and input variables x;
• Providing measurement values xₘ of the specific system as the input variables, wherein the measurement values xₘ correspond to conditions and/or correspond to a behavior of the specific system;
• Using the measurement values xₘ of the specific system by a fitting algorithm to fit the adjustable parameters ai of the raw-model f(aᵢ, xₘ ) to the specific system as to obtain the optimized parameters a₁ of a fitted-model f(a₁, xₘ) of the specific system;
• Using the fitted-model f(a₁, xₙ) of the specific system to generate simulated values Sn by using different sets of input variables xₙ that characterize the conditions and/or characterize the behavior of the specific system;
• Using the simulated values Sₙ to generate the trained machine-learning-model M as to model the specific system.

2. The method of claim 1, wherein the specific system is a traffic network, a power plant, a cement plant, an ecosystem, and/or a waste water treatment unit.

3. The method of claim 1, wherein the specific system is a building.

4. The method of claim 3, wherein the adjustable parameters aᵢ comprise properties of building components like material, thickness, air permeability, reflectivity and/or a window area.

5. The method of claim 4, wherein possible values of the adjustable parameters aᵢ are given as solution space, wherein the fitting algorithm takes a value from the solution space as the optimized parameters *a₁*.

6. The method of any of the claims, wherein the measurement values xₘ of the specific system are obtained when the properties of the building are not artificially impacted, in particular the building is unheated and/or uncooled.

7. The method of any of the claims, wherein the input variables Sₙ are created in a random fashion.

8. The method of any of the claims, wherein a number of the input variables Sₙ is between 5 and 20, in particular 10.

9. The method of any of the claims, wherein selected sensors remain within the specific system to obtain further measured values xf of the specific system and to compare the measured values xf with the corresponding output Sf of the trained machine-learning-model M, wherein the machine-learning-model M is re-trained if the deviation between Sf and xf is larger than a threshold value.

10. The method of any of the claims, wherein an objective function is defined, wherein input variables y of the objective function are evaluated by using the trained machine-learning-model M as to minimize the objective function, wherein the input variables y_{Min} that yield in a minimized objective function represent an optimized condition of the specific system, in particular wherein steering signals are generated based on y_{Min} that are configured to set the specific system into the optimized condition.

11. A usage of a trained machine-learning-model M according to claim 1 to optimize a setting of a specific system by performing the following steps:
• Defining an objective function, wherein input variables y of the objective function are evaluated by an optimization algorithm that uses the machine-learning-model M as to minimize the objective function, wherein the input variables y_{Min} that yield in a minimized objective function represent an optimized setting of the specific system, wherein steering signals are generated based on the input parameters y_{Min};
• Providing the steering signals to a steering unit that sets the specific system into the optimized state.

12. The usage of claim 11, wherein the optimization algorithm is a genetic algorithm

13. The usage of any of the claims 11 to 12, wherein the input variables y comprise energy source capacities, distance to energy sources, energy costs, weather data, number of people, HVAC settings, boundary conditions and/or CO2 Output.

14. Computing unit configured to carry out the steps of the method according to claims 1- 10 and/or configured to carry out the steps of the usage according to claims 11-13.

15. A computer program comprising instructions which, when the program is executed by a computer, cause the computer to carry out the steps of the method of claim 1 or the steps of the usage according to claims 11-13.
